(19) Europäisches Patentamt
European Patent Office
Office européen des brevets

(11) **EP 3 491 825 B1**

(12) **FASCICULE DE BREVET EUROPEEN**

(45) Date de publication et mention de la délivrance du brevet:
**27.05.2020 Bulletin 2020/22**

(21) Numéro de dépôt: **17751437.9**

(22) Date de dépôt: **12.07.2017**

(51) Int Cl.:
***H04N 19/91*** *(2014.01)*   ***H04N 19/132*** *(2014.01)*
***H04N 19/184*** *(2014.01)*   ***H04N 19/85*** *(2014.01)*

(86) Numéro de dépôt international:
**PCT/FR2017/051911**

(87) Numéro de publication internationale:
**WO 2018/020100 (01.02.2018 Gazette 2018/05)**

(54) **PROCÉDÉ DE DÉCODAGE D'UNE IMAGE, PROCÉDÉ DE CODAGE, DISPOSITIFS, ÉQUIPEMENT TERMINAL ET PROGRAMMES D'ORDINATEURS ASSOCIÉS**

VERFAHREN ZUR DECODIERUNG EINES BILDES UND ZUGEHÖRIGES CODIERUNGSVERFAHREN, VORRICHTUNGEN, ENDGERÄTEEINEHIT UND COMPUTERPROGRAMME

METHOD FOR DECODING AN IMAGE, AND ASSOCIATED CODING METHOD, DEVICES, TERMINAL UNIT AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2016 FR 1657334**

(43) Date de publication de la demande:
**05.06.2019 Bulletin 2019/23**

(73) Titulaire: **B<>COM**
**35510 Cesson-Sévigné (FR)**

(72) Inventeurs:
• **HENRY, Félix**
**35760 SAINT GREGOIRE (FR)**
• **CLARE, Gordon**
**35740 PACE (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
**CN-A- 101 808 248    JP-B2- 5 869 115**

• **D. MARPE ET AL: "Context-based adaptive binary arithmetic coding in the H.264/AVC video compression standard", IEEE TRANSACTIONS ON CIRCUITS AND SYSTEMS FOR VIDEO TECHNOLOGY, vol. 13, no. 7, 1 juillet 2003 (2003-07-01), pages 620-636, XP055119784, ISSN: 1051-8215, DOI: 10.1109/TCSVT.2003.815173**
• **DAMIAN KARWOWSKI ET AL: "Improved Context-Based Adaptive Binary Arithmetic Coding in MPEG-4 AVC/H.264 Video Codec", 20 septembre 2010 (2010-09-20), COMPUTER VISION AND GRAPHICS, SPRINGER BERLIN HEIDELBERG, BERLIN, HEIDELBERG, PAGE(S) 25 - 32, XP019152987, ISBN: 978-3-642-15906-0 abrégé section 4 "Improved CABAC Algorithm"**
• **JIN HEO ET AL: "Improved Context-Based Adaptive Binary Arithmetic Coding over H.264/AVC for Lossless Depth Map Coding", IEEE SIGNAL PROCESSING LETTERS, IEEE SERVICE CENTER, PISCATAWAY, NJ, US, vol. 17, no. 10, 1 octobre 2010 (2010-10-01), pages 835-838, XP011313089, ISSN: 1070-9908**

EP 3 491 825 B1

**Description**

## 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

## 2. Art Antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo, parmi lesquelles le standard de compression HEVC ("High Efficiency Video Coding, Coding Tools and Spécification", Matthias Wien, Signais and Communication Technology, 2015).

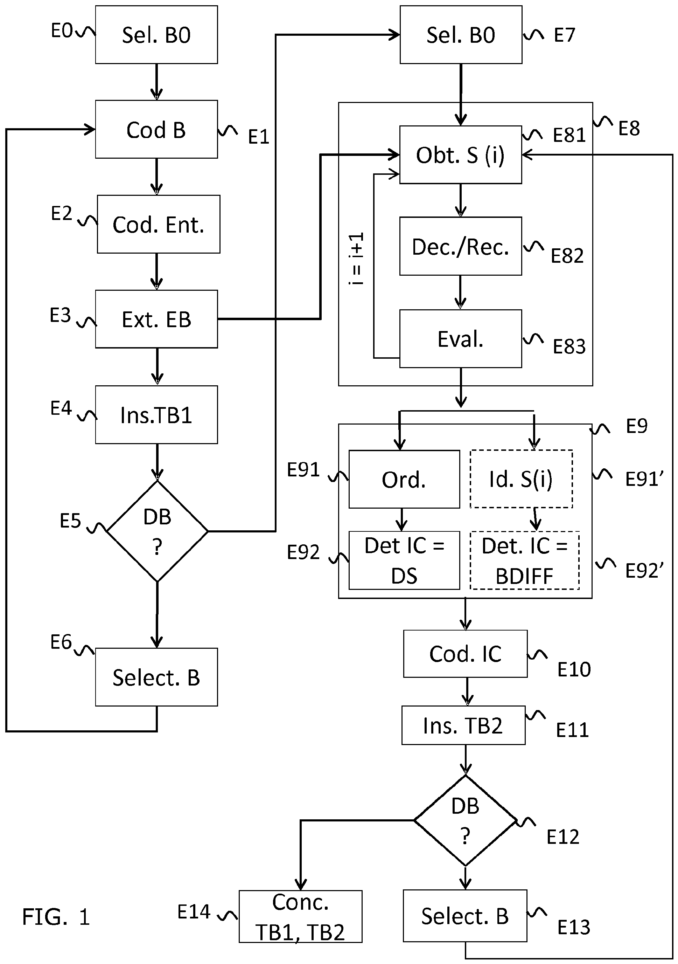

En relation avec la Figure **1**, on considère une vidéo originale constituée d'une suite de M images I1, I2, ...IM, avec M entier non nul. Les images sont encodées par un encodeur, les données codées sont insérées un flux de données codées ou train binaire TB transmis à un décodeur via un réseau de communication, ou un fichier compressé FC, destiné à être stocké sur un disque dur par exemple. Le décodeur extrait les données codées, puis les traite dans un ordre prédéfini connu de l'encodeur et du décodeur, par exemple dans l'ordre temporel I1, puis I2, ..., puis IM, cet ordre pouvant différer suivant le mode de réalisation.

Lors de l'encodage d'une image Im, avec m entier compris entre 1 et M, celle-ci est subdivisée en blocs de taille maximale qui peuvent à leur tour être subdivisés en blocs plus petits. Chaque bloc C va subir une opération d'encodage ou de décodage consistant en une suite d'opérations, comprenant de manière non exhaustive une prédiction, un calcul de résidu du bloc courant, une transformation des pixels du bloc courant en coefficients, une quantification des coefficients et un codage entropique des coefficients quantifiés.

Le traitement d'un bloc C courant met en œuvre un schéma de codage, par exemple tel que spécifié dans la norme HEVC, dans le document "ISO/IEC 23008-2:2013 - High efficiency coding and media delivery in heterogeneous environments -- Part 2: High efficiency video coding », International Organization for Standardization, publié en novembre 2013.

Il fournit un ensemble d'éléments de description du bloc courant C. Ces éléments de description peuvent être de types variés. De façon non exhaustive, ils comprennent notamment :

- les informations relatives à des choix de codage du bloc courant C, par exemple un mode de codage du bloc courant, tel que le mode INTRA, INTER ou SKIP, un mode de prédiction du bloc courant, parmi les 35 modes de prédiction d'un bloc INTRA, un mode de prédiction d'un vecteur mouvement estimé pour le bloc courant, ouencore l'amplitude d'un coefficient, connus en soi dans HEVC;
- les valeurs de données à coder, telles que les composantes d'un vecteur mouvement, l'amplitude ou le signe d'un coefficient ;
- etc

Ces éléments de description sont ensuite codés, par exemple par codage de Huffman ou par codage arithmétique ou toute autre technique connue de codage entropique, en une séquence de symboles binaires qui est insérée dans le flux de données codées.

A cet effet, le codage entropique tel que décrit dans D. MARPE ET AL: "Context-based adaptive binary arithmetic coding in the H.264/AVC video compression standard",IEEE TRANSACTIONS ON CIRCUITS AND SYSTEMS FOR VIDEO TECHNOLOGY, vol. 13, no. 7, 1 juillet 2003 (2003-07-01), pages 620-636, ISSN: 1051-8215, DOI: 10 .1109/TCSVT. 2003. 815173 est largement utilisé dans l'art antérieur.

## 3. Inconvénients de l'art antérieur

Un inconvénient de l'art antérieur est que malgré le taux de compression élevé obtenu par le schéma de codage HEVC, le flux de données codées a des dimensions qui restent trop importantes pour certains contenus multimédia, telles que les images à haute dynamique ou HDR (pour « High Dynaic Range », en anglais) ou encore les vidéos à haute fréquence d'images ou HFR de l'ordre de120 ou 240 images par seconde (pour « High Frame Rate », en anglais).

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permette de réduire encore la taille du flux de données codées à transmettre à un décodeur.

### 5. Exposé de l'invention

Ces objectifs, ainsi que d'autres qui apparaîtront par la suite, sont atteints à l'aide d'un procédé de décodage d'un flux de données codées représentatif d'au moins une image, ladite image étant découpée en blocs, ledit flux comprenant une première portion et une deuxième portion.

Selon l'invention, le procédé de décodage comprend une étape de test de séquences comprenant un nombre prédéterminé non nul d'éléments binaires, ladite étape comprenant deux puissance le nombre prédéterminé itérations des sous-étapes suivantes, pour ledit bloc courant:

- obtention d'une séquence distincte des séquences déjà testées;
- décodage et reconstruction d'une version du bloc courant à partir de la séquence d'éléments binaires obtenue et de données codées lues dans la première portion de flux ;
- évaluation d'une mesure de vraisemblance associée à la séquence obtenue à partir de la version du bloc reconstruite.

Il comprend en outre les étapes suivantes :

- décodage d'une information caractéristique d'une première séquence comprenant le nombre prédéterminé non nul de symboles binaires à partir de la deuxième portion de flux ;
- sélection d'une séquence parmi les séquences testées, en fonction des mesures de vraisemblance associées aux séquences testées et de l'information décodée, ladite séquence sélectionnée étant identifiée comme la première séquence ; et
- décodage et reconstruction du bloc courant à partir de la première séquence et de la première portion de flux.

L'invention concerne aussi un procédé de codage d'un flux de données codées représentatif d'au moins une image, ladite image étant découpée en blocs, caractérisé en ce qu'il comprend les étapes suivantes, mises en œuvre pour un bloc courant :

- Codage du bloc courant en une pluralité de données codées ;
- Extraction de la pluralité de données codées d'une première séquence comprenant un nombre prédéterminé non nul de symboles binaires ;
- Insertion dans une première portion de flux des symboles binaires des données codées n'appartenant pas à la séquence extraite.

Il comprend une étape de test de séquences comprenant le nombre prédéterminé non nul de symboles binaires, ladite étape comprenant deux puissance le nombre prédéterminé itérations des sous-étapes suivantes :

- obtention d'une séquence distincte des séquences déjà testées;
- décodage et reconstruction d'une version du bloc courant à partir de la séquence de symboles binaires obtenue et de données codées lues dans la première portion de flux;
- évaluation d'une mesure de vraisemblance associée à la séquence obtenue à partir de la version du bloc reconstruite ;

et il comprend en outre une étape de détermination d'une information caractéristique de la première séquence et une étape de codage de ladite information dans une deuxième portion du flux.

Avec l'invention, un codeur produit des données codées relatives au bloc courant, dont il extrait une séquence d'éléments binaires, qu'il n'insère pas dans la première portion de flux. En revanche, il insère dans la deuxième portion de flux une information caractéristique de la séquence extraite, que le décodeur pourra exploiter pour reconstruire cette séquence. L'invention propose donc une approche tout-à-fait nouvelle et inventive du codage d'images, qui consiste à supprimer une partie des données codées selon un schéma de compression classique et à transmettre, à leur place, une information de taille plus réduite, qui permet au décodeur de reconstruire les données manquantes.

Avec l'invention, un décodeur reçoit un flux de données codées comprenant deux portions, une première portion comprenant un sous-ensemble des données codées par le codeur pour représenter le bloc courant et une deuxième portion comprenant une information de signalisation complémentaire, caractéristique d'une séquence de données codées qui est manquante dans la première portion de flux.

L'invention propose ainsi une approche tout-à-fait nouvelle et inventive de la compression d'images, qui consiste à tronquer les données codées par le codeur d'un nombre prédéterminé de symboles binaires, les symboles tronqués pouvant être reconstruits par le décodeur en testant différentes hypothèses et à partir de l'information complémentaire transmise par le codeur dans la deuxième portion de flux.

Le recours à un critère de maximisation d'une mesure de vraisemblance permet au décodeur d'identifier l'hypothèse correcte avec une bonne fiabilité. La probabilité pour une hypothèse d'être correcte n'étant pas associée à une distribution uniforme, l'information complémentaire peut être codée de manière efficace, en utilisant moins de bits que la séquence tronquée.

De cette manière, le flux de données obtenu est de taille réduite.

Les différents modes ou caractéristiques de réalisation mentionnés ci-après peuvent être ajoutés indépendamment ou en combinaison les uns avec les autres, aux caractéristiques du procédé de décodage et/ou du procédé de codage défini ci-dessus.

Selon un aspect de l'invention, le procédé comprend une étape de tri des séquences testées selon des valeurs de mesures de vraisemblance associées décroissantes et l'information caractéristique de la première séquence comprend un rang de la première séquence parmi les séquences triées.

Un avantage est que la première séquence étant généralement associée à une mesure de vraisemblance élevée, le rang correspondant est faible et engendre un coût de signalisation réduit.

Selon un autre aspect de l'invention, le procédé comprend une étape de détermination de la séquence testée la plus vraisemblable et l'information caractéristique de la première séquence comprend une mesure d'une différence bit à bit entre la valeur de la première séquence et celle de la séquence la plus vraisemblable.

Un avantage est qu'il n'est pas nécessaire de trier toutes les séquences testées, seulement de déterminer la plus vraisemblable. Un avantage supplémentaire réside dans le fait que le nombre de bits traités reste constant, qu'il s'agisse des bits de la séquence testée ou des différences bit à bit qui peuvent elle-même être codées chacune sur 1 bit. Ainsi, on va pouvoir traiter l'ensemble de ces données sur des architectures à longueur de bits constante, typiquement un multiple de 8, ce qui permet une implémentation simple sur un circuit électronique qui manipule préférentiellement des octets.

Selon un autre aspect de l'invention, l'étape d'évaluation comprend un calcul d'une mesure de distorsion des valeurs de pixels de part et d'autre d'au moins une frontière du bloc courant avec un bloc voisin déjà traité et la mesure de vraisemblance évaluée est inversement proportionnelle à la mesure de distorsion.

Un avantage de cette mesure est d'être fiable pour les images naturelles dont les pixels proches ont des valeurs fortement corrélées.

Selon encore un autre aspect de l'invention, l'étape de décodage et reconstruction complète la première portion de flux en insérant au moins une partie des éléments binaires de la séquence à au moins une position prédéterminée.

Le codeur extrait les éléments binaires des données codées à des positions qui sont connues au préalable du décodeur. De cette manière, il n'est pas nécessaire de prévoir de signalisation

Selon un autre aspect de l'invention, la position déterminée est située avant le premier élément binaire des données codées associées au bloc courant.

Un avantage de ce mode de réalisation est d'une part sa simplicité et d'autre part de garantir qu'on pourra toujours supprimer au moins quelques éléments binaires des données codées relatives au bloc courant, même si leur taille est réduite.

Selon encore un autre aspect de l'invention, le procédé de décodage comprend une étape de reconstruction d'un flux de données codées complété à partir de la première portion de flux et de la séquence sélectionnée.

Un avantage est de reconstruire un flux de données complet qui peut être décodé par un décodeur classique au cours d'une deuxième passe.

Selon un autre aspect de l'invention, le procédé de décodage comprend une étape de stockage dans une mémoire du bloc reconstruit.

Un avantage est de permettre la restitution de l'image reconstruite sans nécessiter de deuxième passe de décodage.

Avantageusement, les étapes de décodage comprennent un décodage entropique à états finis, l'étape de stockage comprend en outre le stockage d'un état du décodeur entropique associé à la séquence sélectionnée.

De cette manière, le décodeur entropique peut, suite au test des $2^N$ hypothèses se repositionner sur l'état associé à l'hypothèse correcte avant de commencer le décodage du bloc suivant.

Les différents modes ou caractéristiques de réalisation mentionnés ci-après peuvent être ajoutés indépendamment ou en combinaison les uns avec les autres, aux caractéristiques du procédé de décodage et/ou du procédé de codage défini ci-dessus.

L'invention concerne également un dispositif de décodage adapté pour mettre en œuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Selon un mode particulier de réalisation de l'invention, un tel dispositif de décodage est compris dans un terminal.

L'invention concerne également un dispositif de codage adapté pour mettre en œuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

Selon un mode particulier de réalisation de l'invention, un tel dispositif de codage est compris dans un terminal, ou un serveur.

Corrélativement, l'invention concerne aussi un équipement terminal comprenant un dispositif de décodage et/ou un dispositif de codage qui viennent d'être décrits.

L'invention concerne aussi un signal porteur d'un flux de données codées représentatives d'au moins une image numérique, ladite image numérique étant divisée en blocs de pixels traités dans un ordre défini, caractérisé en ce que le flux de données codées comprend, pour un bloc courant, au moins une première portion de flux comprenant des données codées représentatives d'éléments de syntaxe du bloc courant et une deuxième portion de flux comprenant une information caractéristique d'une première séquence comprenant un nombre prédéterminé non nul d'éléments binaires, et en ce que, sur réception dudit signal, un décodeur est apte à identifier la première séquence d'éléments binaires à partir de l'information codée et à reconstruire le bloc courant à partir des données décodées de la première portion de flux et de la première séquence identifiée.

Le procédé de décodage, respectivement le procédé de codage, selon l'invention peut être mis en œuvre de diverses manières, notamment sous forme câblée ou sous forme logicielle.

Selon un mode particulier de réalisation de l'invention, le procédé de décodage, respectivement le procédé de codage, est mis en œuvre par un programme d'ordinateur. L'invention concerne également un programme d'ordinateur comportant des instructions pour la mise en œuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Un support d'enregistrement ou support d'informations lisible par un ordinateur, peut comporter des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement, par exemple magnétique tel qu'un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** décrit de façon schématique le procédé de codage d'une image selon un mode de réalisation de l'invention ;

- les figures **2, 3** et **4** illustrent de façon schématique l'étape de décodage d'un bloc courant à partir d'une séquence d'éléments binaires testée et de données codées de la première portion de flux ;

- la figure **5** illustre de façon schématique un exemple de mesure de coût calculée pour évaluer une mesure de vraisemblance associée à une hypothèse testée pour le bloc courant ;

- la figure **6** illustre de façon schématique un exemple de structure d'un flux de données comprenant une première et une deuxième portions de flux selon l'invention ;

- la figure **7** décrit de façon schématique un procédé de décodage d'une image selon un mode de réalisation de l'invention ;

- la figure **8** illustre de façon schématique l'étape de lecture de données codées dans la première et la deuxième portion de flux à l'aide d'un premier et d'un deuxième pointeurs.

- la figure **9** illustre de façon schématique l'étape de décodage/reconstruction d'un bloc courant à partir de données codées et de la séquence d'éléments binaires identifiée par le décodeur ;

- la figure **10** illustre de façon schématique la structure matérielle d'un dispositif de codage selon un mode de réalisation de l'invention ; et

- la figure **11** illustre de façon schématique la structure matérielle d'un dispositif de décodage selon un mode de réalisation de l'invention.

## 7. Description d'un mode de réalisation particulier de l'invention

### 7.1 Principe général

Le principe général de l'invention repose sur la suppression côté codeur, d'un sous-ensemble des symboles binaires constituant les données codées d'un bloc courant et sur la transmission d'un flux de données codées comprenant, dans une première portion, les données codées tronquées et, dans une deuxième portion, une information caractéristique de la séquence supprimée.
Le décodeur selon l'invention décode l'information puis reconstruit la séquence de symboles binaires à l'aide de l'information décodée

### 7.2 Description d'un mode de réalisation d'un procédé de codage selon l'invention

En relation avec la Figure **1**, on décrit les étapes d'un procédé de codage d'une image selon un premier mode de réalisation de l'invention.
Dans la suite, on considère une vidéo originale constituée d'une suite de M images I1, I2, ...IM. Les images sont encodées dans un ordre prédéfini connu de l'encodeur et du décodeur, par exemple dans l'ordre temporel I1, puis I2, ..., puis IM (cet ordre peut différer suivant le mode de réalisation).
Le procédé de codage selon l'invention comprend deux phases, une première phase de formation d'une première portion de flux de données codées et une deuxième phase de formation d'une deuxième portion de flux.

### 7.2.1 Formation d'une première portion de flux

Lors de l'encodage, l'image Im est subdivisée en blocs de taille variable dont l'ordre de traitement est connu de l'encodeur et du décodeur. Chaque bloc va subir une opération d'encodage consistant en une suite d'opérations (application d'étapes de prédiction, calcul de résidu, quantification, codage entropique) qui sera détaillée par la suite.

### 7.2.1.1 Sélection premier bloc

Au cours de cette étape E0 on sélectionne comme bloc courant B le premier bloc à traiter. Dans le mode préféré de réalisation, il s'agit du premier bloc (dans l'ordre lexicographique).

### 7.2.1.2 Codage du bloc courant en éléments de syntaxe

Au cours de cette étape E1 on va encoder de façon classique ce bloc B, par exemple comme le décrit la norme de codage vidéo HEVC.
Cette étape consiste typiquement à prédire le bloc courant à l'aide de pixels précédemment traités dans la même image ou dans une image précédemment traitée, à produire un résidu représentatif de la différence entre la prédiction et les vraies valeurs des pixels du bloc courant, à transformer ce résidu par transformée fréquentielle comme une DCT par exemple, à quantifier ce résidu transformé. Chacune de ces opérations (non exhaustives) est susceptible de produire des éléments de syntaxe qui sont des valeurs indicatives, par exemple, du type de prédiction utilisée, du type de transformée utilisée, de la division du bloc courant en sous-blocs, de la valeur et du signe des résidus quantifiés, etc.

7.2.1.3 Codage des éléments de syntaxe

Au cours de cette étape E2, chaque élément de syntaxe est ensuite codé par codage entropique, par exemple de type CABAC comme spécifié dans la norme HEVC. Cette étape transforme donc les éléments de syntaxe en une suite de symboles binaires 0 et 1. Cette suite de symboles binaire représente le bloc courant.

Le codage entropique consiste à exploiter la distribution des éléments de syntaxe pour en réduire le débit. Par exemple, pour un élément de syntaxe prenant de multiples valeurs possibles, on attribuera un code binaire court aux valeurs fréquentes et un code binaire long aux valeurs rares. Ceci permet de réduire, en moyenne, le nombre de bits nécessaires au codage de ces valeurs. Le code Morse est un exemple de code entropique adapté à la statistique des lettres (qui constituent dans ce cas les éléments de syntaxe) dans la langue anglaise. Le code de Huffman est une technique pour construire un code binaire adapté à une statistique donnée, avec pour principe que chaque élément de syntaxe est codé par un nombre entier de bits. Le codage arithmétique permet quant à lui de mutualiser des bits entre plusieurs éléments de syntaxe, et ainsi de coder un élément de syntaxe sur un nombre non entier de bits.

La séquence d'éléments binaires issue de l'étape de codage entropique est ajoutée à la suite d'un train binaire intermédiaire TB0, comprenant les données codées des blocs déjà traités.

7.2.1.4 Détermination d'un ensemble EB de N éléments binaires du train binaire intermédiaire associés au codage du bloc courant B

Au cours de cette étape E3, on détermine quel serait, pour le bloc courant, le premier bit qu'il serait nécessaire de lire dans le flux compressé intermédiaire si l'on tentait de décoder ce flux binaire à partir de moyens classiques tels qu'un décodeur HEVC. Selon un mode de réalisation de l'invention, on a recours lors du décodage, à un pointeur de flux PF0 que l'on déplace au fur et à mesure de la lecture de données codées dans le flux.

Cette étape E3 peut être effectuée lors de l'encodage dudit bloc courant, ou encore en simulant son décodage.

Ensuite, une séquence d'éléments binaires est identifiée. Il s'agit des bits consécutifs situés après (et incluant) le premier bit et avant le dernier qu'il est nécessaire de lire pour décoder le bloc courant, dans la limite de N bits, où N est un nombre fixé. Ces bits forment un ensemble de bits EB ayant une valeur. Ainsi, prenons un exemple où N vaut 4, pour le bloc courant, les bits EB valent par exemple 1011. On notera que si le bloc courant est codé sur moins de N bits, l'ensemble EB contient lui-même moins de N bits

Dans un mode alternatif de réalisation, les N bits EB sont les N dernier bits lus lors du décodage du bloc courant.

7.2.1.5 Création de la première portion de flux à partir des données codées

Au cours de cette étape E4 on supprime du train binaire intermédiaire TB0 les éléments binaires EB déterminés et on ajoute les éléments binaires restants à un deuxième train binaire TB1, qu'on désignera dans la suite par première portion de flux. Autrement dit, le deuxième train binaire TB1 est donc constitué pour chaque bloc des symboles binaires du premier train binaire TB0 auxquels sont retirés les éléments binaires EB associés à chaque bloc.

On notera que dans un mode alternatif de réalisation, il est possible de combiner cette étape avec la précédente : dans ce cas, on n'a pas recours à un train binaire intermédiaire TB0, mais on écrit directement dans la première portion de flux TB1 les éléments binaires représentatifs des données codées du bloc courant hormis les bits EB.

7.2.1.6 Test de dernier bloc

Au cours de cette étape E5, on vient tester si le bloc courant est le dernier bloc à traiter par le codeur, compte tenu de l'ordre de parcours défini précédemment. Si oui, l'étape suivante est l'étape de sélection du premier bloc. Si non, l'étape suivante est l'étape de codage E1 du nouveau bloc courant en éléments de syntaxe.

7.2.1.7 Bloc suivant

Au cours de cette étape E6 on vient sélectionner le bloc suivant B à traiter selon le procédé qui vient d'être décrit. Ce bloc devient le bloc courant à traiter, et l'étape suivante est l'étape de prédiction.

A ce stade, tous les blocs de l'image courante ont été traités une première fois et une partie des données codées pour le bloc courant a été insérée dans la première portion de flux TB1.

7.2.2 Formation d'une deuxième portion de flux de données codées

Au cours d'une deuxième phase du procédé d'encodage selon l'invention, on forme une deuxième portion de flux TB2 de la façon suivante :

7.2.2.1 Sélection premier bloc

Au cours de cette étape E7 on sélectionne comme bloc courant B le premier bloc à traiter. Dans le mode préféré de réalisation, il s'agit du premier bloc (dans l'ordre lexicographique).

7.2.2.2 Test de séquences

Au cours de cette étape E8, on teste les $2^N$ séquences de N symboles binaires possibles, ou hypothèses, pour remplacer la séquence d'éléments binaires EB qui a été supprimée du train binaire TB0 pour le bloc courant. L'objectif est de parcourir toutes les hypothèses et de reconstruire le bloc courant pour chacune d'elles. Par exemple, si EB contient 4 bits, on va tester 16 hypothèses.

7.2.2.2.1 Obtention d'une hypothèse

En E81, on sélectionne une hypothèse, distincte de celles précédemment traitées, pour les bits EB associés au bloc courant, par exemple selon un ordre de valeur croissant du nombre formé par la séquence d'éléments binaires.

Dans le cas où N vaut 4, on a :

Hypothèse numéro 0, H(0)=0000

Hypothèse numéro 1, H(1)=0001

Hypothèse numéro 2, H(2)=0010

Hypothèse numéro 15, H(15)=1111

La première hypothèse testée est donc l'hypothèse H(0)=0000.

7.2.2.2.2 Détermination des éléments de syntaxe sous l'hypothèse courante

Au cours de cette étape E7 on décode le bloc courant en utilisant l'hypothèse numéro H(i) pour l'ensemble de bits EB.

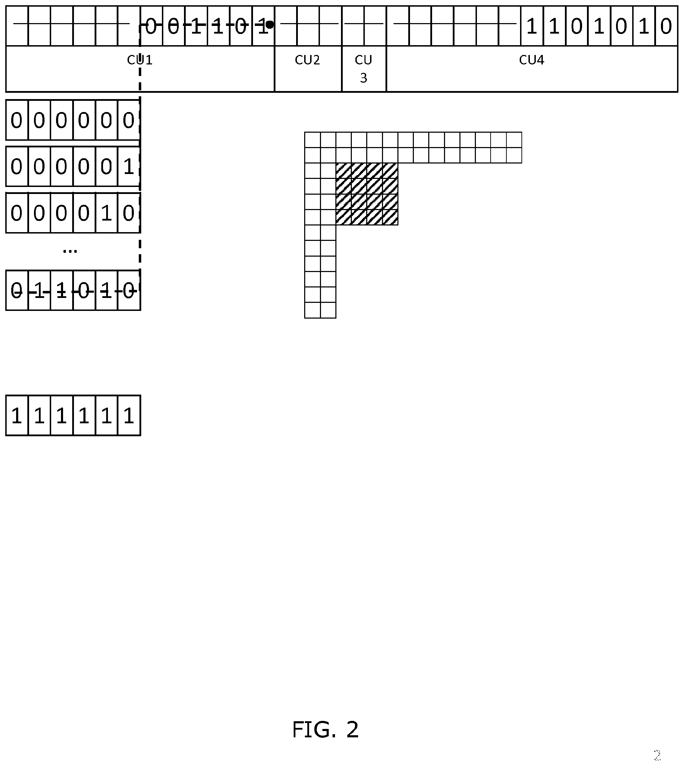

En relation avec les Figures **2**,**3** et **4** on considère un exemple de réalisation selon lequel les éléments binaires EB ont été extraits à partir du premier élément binaire représentatif du bloc courant. On suppose que cette position est pointée par un premier pointeur de flux PF1. Elle correspond à une position de lecture d'éléments binaires du flux TB1.

L'opération de décodage consiste donc à décoder les éléments de syntaxe du bloc à partir d'au moins une partie des bits EB de l'hypothèse courante suivie (le cas échéant, car le décodage du bloc peut être terminé avant) des éléments binaires de la première portion de flux TB1 relatifs au bloc courant. Ce décodage produit une séquence d'éléments de syntaxe SES(i), où i est le numéro de l'hypothèse courante.

Dans l'exemple de la Figure **2**, la séquence d'éléments binaires H(i) est complètement lue ainsi que les éléments binaires de la première portion de flux associés au bloc courant, à compter de la position du pointeur PF1.

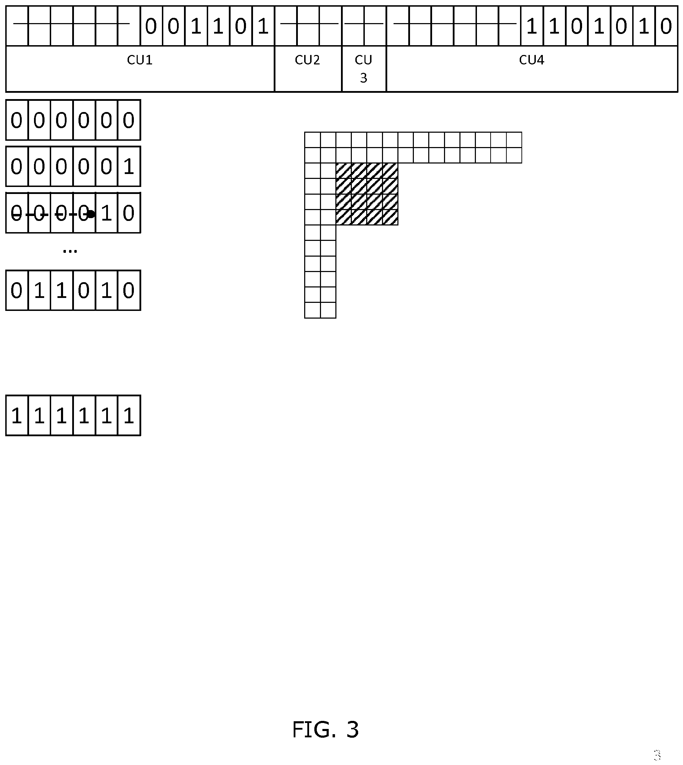

Dans l'exemple de la Figure **3**, la séquence d'éléments binaires H(i) n'est pas complètement lue, parce que le décodeur intégré au codeur a obtenu les valeurs des éléments de syntaxe dont il a besoin à l'aide des premiers bits de la séquence selon cette hypothèse et n'en a donc pas eu besoin. On peut donc supposer que l'hypothèse H(i) ne correspond pas à la séquence de bits extraite de TB0.

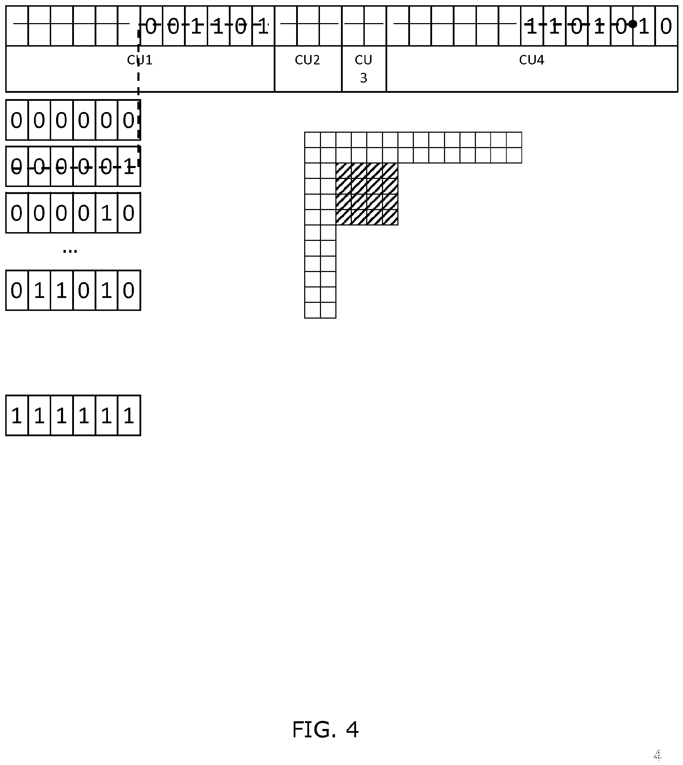

Dans l'exemple de la Figure **4**, la séquence d'éléments binaires EB(i) est complètement lue, ainsi que des éléments binaires de la première portion de flux situés au-delà de la limite des données codées du bloc courant. On peut donc supposer que l'hypothèse H(i) ne correspond pas à la séquence de bits extraite de TB0.

A l'issue de ce décodage, on dispose de la séquence d'éléments de syntaxe SES(i) pour l'hypothèse i.

### 7.2.2.2.3 Reconstruction du bloc associé à l'hypothèse courante

Au cours de cette sous-étape E82, pour l'hypothèse H(i), on reconstruit une version décodée VB(i) du bloc courant. Elle est construite à partir des éléments de syntaxe SES(i) lus dans la première portion de flux et/ou dans la séquence qui correspond à l'hypothèse.

### 7.2.2.2.4 Evaluation d'une mesure de vraisemblance associée au bloc décodé

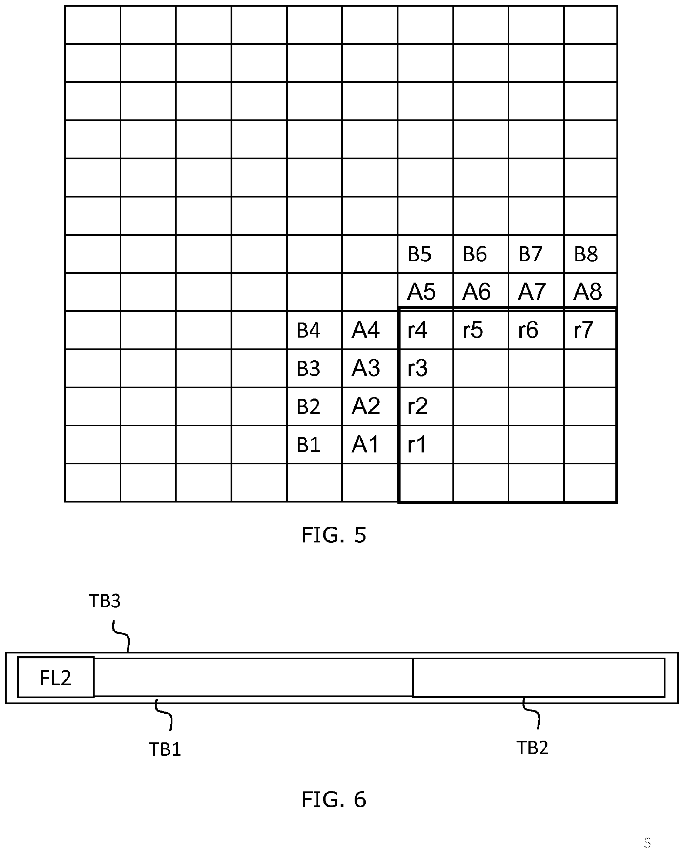

Au cours de cette sous-étape E83, nous allons évaluer un coût associé à chaque version décodée du bloc courant VB(i). Dans le mode préféré de réalisation et en relation avec la Figure **5**, cette approche consiste à extrapoler une série de valeurs {rj} de la façon suivante. Supposons que le bloc courant soit un bloc de taille 4x4 pixels. Les pixels situés immédiatement à gauche et au-dessus du bloc courant sont dénommés A1, A2,..., A8. Les pixels situés à gauche et au-dessus des pixels A1, A2,..., A8 sont dénommés B1, B2, ... ,B8. Les valeurs {rj} extrapolées sont calculées de la façon suivante :

$$r1 = 2.A1 - B1$$

$$r2 = 2.A2 - B2$$

$$r3 = 2.A3 - B3$$

$$r4 = 2.A4 - B4$$

$$r5 = 2.A6 - B6$$

$$r6 = 2.A7 - B7$$

$$r7 = 2.A8 - B8$$

Ensuite, le coût C(i) de l'hypothèse H(i) est calculé de la façon suivante :

$$C(i) = |r1-X1| + |r2-X2| + |r3-X3| + |r4-X4| + |r5-X5| + |r6-X6| + |r7-X7|$$

Où X1, X2, X3, X4 sont les valeurs des pixels de la première colonne du bloc VB(i) et X4,X5,X6,X7 les valeurs de pixels de la première ligne de ce bloc.
On voit que cette mesure de coût est représentative de la discontinuité le long des frontières du bloc.
Dans des modes alternatifs de réalisation, d'autres mesures de coût sont possibles. Par exemple, on peut choisir la somme des différences inter-pixels de tous les pixels internes au bloc. Ou encore, on peut calculer une énergie du résidu du bloc courant.
On en déduit une mesure de vraisemblance V(i) = -C(i). Plus le coût de l'hypothèse H(i) est élevé, moins l'hypothèse est vraisemblable.

### 7.2.2.2.5 Test de dernière hypothèse

Au cours de cette étape (non représentée) on va vérifier si l'hypothèse courante H(i) est la dernière hypothèse à tester sur les bits EB. Dans le mode préféré de réalisation où nous testons les valeurs binaires dans l'ordre croissant classique, ce test consiste à vérifier si la valeur ne contient que des 1.
Si c'est le cas, on passe à l'étape E9 de détermination d'une information caractéristique de la séquence EB. Sinon, on retourne à l'étape E81 pour tester l'hypothèse suivante.

### 7.2.2.3 Détermination d'une information caractéristique de la séquence de symboles binaires EB

Toutes les hypothèses ont été testées.
Dans un premier mode de réalisation de l'invention, on trie en E91 les séquences testées selon un ordre de mesure de vraisemblance décroissante et on détermine au cours d'une étape E92 la valeur d'une information caractéristique IC de la séquence d'éléments binaires EB qui correspond à un rang de l'hypothèse correcte H(i) (soit la valeur H(4) = 1011 dans notre exemple) dans un tableau qui contient toutes les hypothèses classées par coût croissant ou par mesure de vraisemblance décroissante. Ainsi, on peut trouver que l'hypothèse 1011 est la 4ème parmi les 16 combinaisons classées par coût croissant. On va alors affecter la valeur 4 à un élément de syntaxe DS associé au bloc courant.

Bien sûr, on peut utiliser d'autres types d'informations caractéristiques. Ainsi, dans un deuxième mode de réalisation, on identifie en E91' la séquence S (i) qui correspond à l'hypothèse la plus vraisemblable, c'est-à-dire celle dont le coût est le plus faible. Ensuite, on compare bit à bit les séquences EB et S(i) en E92', et on construit une information caractéristique IC = BDIFF représentative de l'égalité ou de l'inégalité entre les bits. Par exemple, on peut commencer par comparer les valeurs du bit de poids le plus fort de EB et SEB(i), et transmettre BDIFF=0 si ils sont différents et BDIFF=1 si ils sont égaux. Ensuite, on applique le même procédé au deuxième bit de poids fort, et on répète le procédé jusqu'au bit de poids faible. On constate que le plus souvent, les bits sont égaux. BDIFF prend donc plus souvent la valeur 1 que 0.

7.2.2.4 Codage d'une information caractéristique de la séquence d'éléments binaires dans la deuxième portion de flux

Au cours de cette étape E10, on code la valeur de l'information caractéristique IC déterminée par codage entropique, de façon classique, par exemple avec un codeur CABAC. On insère la valeur codée dans la deuxième portion de flux TB2.

En ce qui concerne le premier mode de réalisation, le coût associé à la combinaison correcte tend à être faible, donc la valeur de DS est souvent petite. On a donc une répartition statistique non uniforme des occurrences de DS sur l'ensemble des valeurs possibles, ce qui permet de réduire le débit, en utilisant un codeur entropique classique (codage de Huffman, codage arithmétique), adapté à la statistique de DS.

En ce qui concerne le deuxième mode de réalisation, la séquence la plus vraisemblable est généralement proche de la séquence correcte ce qui fait que la différence bit à bit a une valeur qui est souvent petite. La répartition statistique des occurrences est dans ce cas aussi non uniforme ce qui permet au codeur entropique de réaliser une compression efficace.

7.2.2.5 Test de dernier bloc

Au cours de cette étape E11, on vient tester si le bloc courant est le dernier bloc à traiter, compte tenu de l'ordre de parcours défini précédemment. Si oui, l'étape suivante est l'étape E13 de concaténation des première et deuxième portions de flux TB1 et TB2. Si non, l'étape suivante est l'étape de sélection du bloc suivant.

7.2.2.6 Bloc suivant

Au cours de cette étape E12 on vient sélectionner le bloc suivant à traiter par l'unité de codage, tel que décrit précédemment. Ce bloc devient le bloc courant à traiter, et l'étape suivante est l'étape de sélection de la première hypothèse.

7.2.2.7 Concaténation des trains binaires

Au cours de cette étape E13 on va concaténer la première et la deuxième portions de flux TB1 et TB2 pour constituer le train binaire final TB3 qui peut être ensuite stocké ou transmis au décodeur. La concaténation peut se faire par juxtaposition comme illustré par la Figure **6**, ou par multiplexage des bits des flux TB1 et TB2, ou par toute autre façon de combiner les deux flux, pourvu qu'elle permette au décodeur de les distinguer.

Cette étape peut comprendre en outre une insertion dans le flux final TB3 d'une information permettant d'identifier la localisation de la deuxième portion de flux TB2. Par exemple, si les flux TB1 et TB2 sont juxtaposés dans cet ordre, une information sera insérée avant le début du premier flux TB1 afin d'indiquer où se trouve le début du flux TB2 dans le flux de données final TB3. Il s'agit par exemple d'un flag FL2 qui comprend une adresse correspondant au début de la deuxième portion TB2.

7.3 Description d'un mode de réalisation d'un procédé de décodage selon l'invention

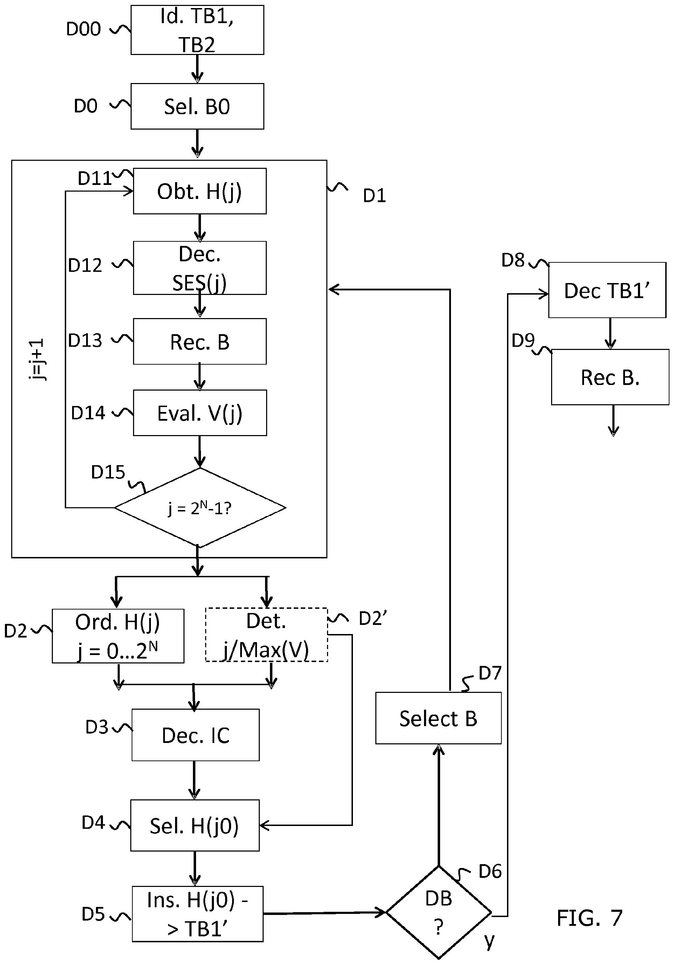

Dans la suite, on considère un décodeur ayant reçu le train binaire TB3 produit par le procédé de codage selon l'invention et on décrit un procédé de décodage selon l'invention en relation avec la Figure **7.**

7.3.1 Identification de la première et de la deuxième portion TB1, TB2 dans le train binaire TB3

Au cours de cette étape D00, on va identifier la première portion de flux TB1 comprenant au moins une partie des données codées des blocs de l'image et une deuxième portion de flux TB2 comprenant les informations IC caractéristiques des séquences de symboles binaires manquantes dans la première portion de flux.

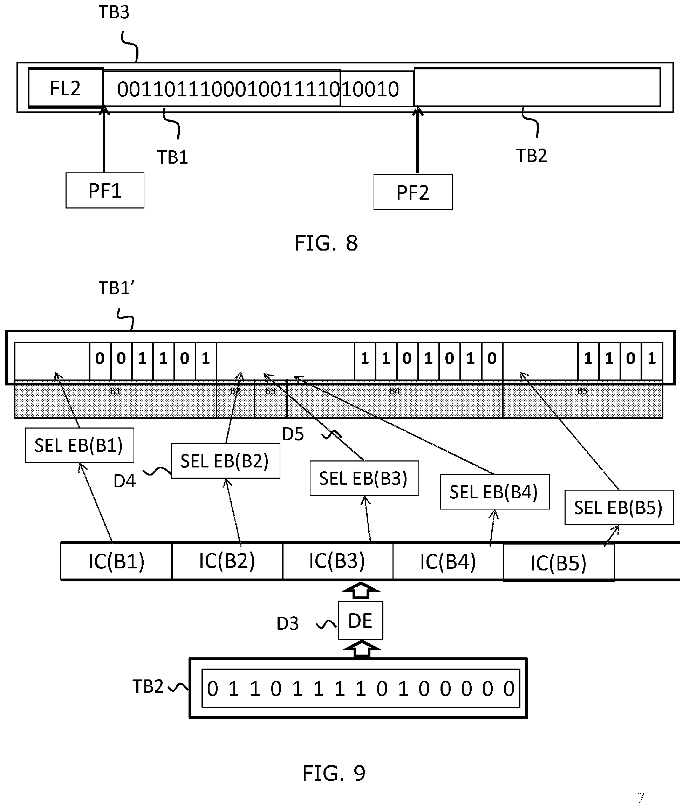

En relation avec la Figure **8**, on suppose que la première et la deuxième portion de flux sont juxtaposées, avec TB1 suivi par TB2 et on lit dans le flux TB3 une information FL2 représentative d'une position de début de la deuxième portion de flux TB2 dans le flux complet TB3. Ainsi, techniquement, le décodeur a recours de façon classique à un premier pointeur de fichier PF1 dont la position est initialisée au début du flux TB3 et qui se déplace dans la première portion de flux au fur et à mesure de l'avancement du décodage et, selon l'invention, un deuxième pointeur de fichier PF2, dont la position est initialisée au niveau de l'adresse indiquée par le flag FL2 et qui se déplace dans la deuxième portion de flux au fur et à mesure de l'avancement du décodage.

7.3.2 Sélection de premier bloc

Cette étape D0 est identique à celle mise en œuvre au codage.

7.3.2 Traitement des données de la première portion de flux pour le bloc courant

7.3.2.1 Test des séquences d'éléments binaires de taille N

Au cours de cette étape D1, on teste les $2^N$ séquences de N symboles binaires ou hypothèses H(j) possibles avec j entier compris entre 1 et $2^N$-1. L'objectif est de parcourir toutes les hypothèses. Par exemple, si le sous ensemble EB contient N=4 bits, on va tester 16 hypothèses.

Par exemple, on parcourt les hypothèses selon un ordre prédéterminé comme déjà décrit dans la section 7.2.2.2.1 pour le procédé de codage selon l'invention et on réalise les étapes suivantes :

7.3.2.1.1 Obtention d'une hypothèse H(j) - sous-étape D11

On obtient une hypothèse, parmi les hypothèses non encore traitées.

7.3.2.1.2 Détermination des éléments de syntaxe correspondant à l'hypothèse courante H(j).- sous-étape D12

On suppose que la séquence de N éléments binaires EB a été extraite par l'encodeur au début des données codées du bloc courant B. Le décodeur reproduit le fonctionnement de l'encodeur et commence par décoder les éléments binaires de la séquence de l'hypothèse courante H(j) pour déterminer les valeurs des éléments de syntaxe SES(j) dont il a besoin pour décoder le bloc courant.

Plusieurs cas de figure peuvent se présenter :

- Le décodeur n'a pas décodé tous les éléments de syntaxe dont il a besoin à partir des N éléments binaires de la séquence H(j). Il continue son décodage en lisant les données de la première portion de flux TB1 à partir de la position courante du pointeur PF1 qu'il déplace au fur et à mesure de sa lecture,

- le décodeur a décodé tous les éléments de syntaxe dont il a besoin pour le bloc courant à partir des N éléments binaires de la séquence H(i). Dans ce cas, il ne déplace par le pointeur PF1 et ne lit pas d'information dans la première portion de flux TB1;

- le décodeur a décodé tous les éléments de syntaxe dont il a besoin à partir des M<N premiers éléments binaires de la séquence H(i). Il ne garde que ceux-là et si la séquence H(i) s'avère être l'hypothèse correcte, il n'insère que ceux-là dans la première portion de flux TB1.

On notera que cette étape comprend généralement une sous-étape de décodage entropique DE des éléments binaires lus dans l'hypothèse H(j) ou dans la première portion de flux TB1.

7.3.2.1.3 Reconstruction du bloc courant à partir des éléments de syntaxe décodés - sous-étape D13

Au cours de cette sous-étape D13, pour l'hypothèse H(j), on reconstruit une version décodée VB(j) du bloc courant. Elle est construite à partir des éléments de syntaxe SES(j) déterminés en D12. Par exemple, dans un schéma de décodage type HEVC, les éléments de syntaxe déterminés permettent d'obtenir un résidu du bloc courant qu'on ajoute à une prédiction de ce bloc réalisée à partir des blocs voisins déjà décodés et reconstruits.

7.3.2.1.4 Calcul d'une mesure de vraisemblance associée à la reconstruction du bloc courant avec les éléments binaires de la séquence de l'hypothèse courante - sous-étape D14

De façon similaire à celle décrite pour le procédé de codage, cette sous-étape D14 calcule une mesure de vraisemblance V(j) associée à l'hypothèse courante H(j). Dans un mode de réalisation, cette mesure est choisie égale à l'opposé d'un coût représentatif d'une discontinuité aux frontières du bloc courant avec des blocs voisins déjà traités et reconstruits.

7.3.2.1.5 Test de dernière hypothèse -D15

Cette étape est identique à celle mise en œuvre au codage.
Une fois toutes les hypothèses traitées, on dispose pour chacune d'elles des éléments de syntaxes associés au bloc courant et d'une mesure de vraisemblance.

7.3.2.2 Ordonnancement des hypothèses en fonction de la mesure de vraisemblance calculée.

Dans le premier mode de réalisation de l'invention, de façon analogue à celle décrite pour le codeur, on trie en D2 les hypothèses de la plus vraisemblable à la moins vraisemblable. On forme ainsi une liste ordonnée selon un ordre correspondant à une mesure de vraisemblance décroissante.
Dans un deuxième mode de réalisation de l'invention, correspondant à celui décrit pour le codeur, on détermine en D2' l'hypothèse la plus vraisemblable, c'est-à-dire celle qui maximise la mesure de vraisemblance évaluée.

7.3.3 Lecture d'une information caractéristique de la séquence d'éléments binaire extraite par le codeur dans la deuxième portion de flux TB2

Au cours de cette étape D3, on va lire dans la deuxième portion de flux TB2 un élément de syntaxe DS représentatif d'une information caractéristique de l'hypothèse correcte. En relation avec la Figure **9**, le décodeur commence sa lecture à partir de la position courante du pointeur PF2 de deuxième portion de flux. Il effectue donc en D3 un décodage entropique classique DE, par exemple de type CABAC, pour décoder la valeur de l'information IC caractéristique de la séquence extraite par l'encodeur.
Dans un premier mode de réalisation de l'invention, l'information IC est un rang DS.
Dans un deuxième mode de réalisation, l'information IC est une différence bit à bit avec la séquence la plus vraisemblable déterminée.

7.3.4 Identification de l'hypothèse correcte à partir des éléments de syntaxe SES(j0) et de l'élément de syntaxe IC lu

Au cours de cette sous-étape D4, on identifie l'hypothèse correcte H(j0) pour les bits EB à partir de l'information caractéristique IC décodée. Dans le premier mode de réalisation, elle correspond, dans la liste ordonnée d'hypothèses, à celle qui a le rang DS. Dans le deuxième mode de réalisation, elle correspond à l'hypothèse H(j0) dont la séquence d'éléments binaires a une différence bit à bit avec la séquence la plus vraisemblable qui est égale à IC.

7.3.4 Ecriture des bits de l'hypothèse correcte dans la première portion de flux TB1

Au cours de cette étape D5, au moins une partie des bits EB déterminés est insérée dans la première portion de flux TB1 à l'endroit où ils ont été supprimés par l'encodeur.
On notera que si, lors de la détermination des éléments de syntaxe SES(j) (D12), le décodeur n'a pas eu besoin de lire tous les éléments binaires de la séquence H(j0) pour décoder les éléments de syntaxe du bloc courant, alors, pour compléter la première portion de flux TB1, il ne retient que les éléments binaires de l'hypothèse correcte H(j0) qu'il a réellement utilisés. Autrement dit la séquence d'éléments binaires déterminée comme l'hypothèse correcte comprend un nombre d'éléments inférieur au nombre N prédéterminé, ce qui correspond à l'exemple déjà décrit de la Figure **3.**
Dans ce mode de réalisation, un nouveau flux de données codées complet TB1' est reconstruit à partir de la première portion de flux TB1 reçue et des séquences d'éléments binaires associées à chaque bloc.
On notera que cette étape D5 de reconstruction d'un train binaire TB1' complet est optionnelle, dans la mesure où les éléments de syntaxe associés au bloc courant ont déjà été décodés et les pixels du bloc courant déjà reconstruits.
On peut simplement les stocker dans une mémoire MEM2 au cours d'une étape D5' de façon à pouvoir afficher l'image courante reconstruite.
Néanmoins, on notera qu'il existe des décodeurs entropiques à états finis. Ces décodeurs comportent des variables internes. Lors du décodage d'une partie d'un flux binaire, la valeur décodée dépend de la valeur des variables internes, et les variables internes sont mises à jour et donc éventuellement modifiées. Un exemple de décodage entropique à états finis est le décodeur CABAC utilisé dans le standard HEVC. Lorsqu'on a recours à un décodeur entropique à états finis, il faut veiller à ce que le décodeur entropique retrouve l'état qu'il avait atteint lors du décodage du bloc courant avant de commencer celui du bloc suivant. Pour ce faire, deux options peuvent être envisagées :

- soit reformer en D5 le flux TB1 complet comme précédemment décrit afin de permettre au décodeur entropique de refaire le décodage complet des éléments binaires correspondant à chaque bloc et cette manière retrouver l'état qu'il avait atteint pour l'hypothèse correcte ;

- soit mémoriser en D5', en plus des éléments de syntaxe, ou des pixels décodés pour le bloc courant, l'état du décodeur entropique correspondant à chaque hypothèse, de façon à ce que le décodeur entropique se repositionne sur l'état correspondant à l'hypothèse correcte avant de commencer le décodage du bloc suivant.

7.3.5 Test de dernier bloc

Au cours de cette étape D6, on vient tester si le bloc courant est le dernier bloc à traiter par l'unité de décodage. Si oui, le codeur a terminé son traitement. Si non, l'étape suivante est l'étape de sélection du bloc suivant

7.3.6 Sélection du bloc suivant

Au cours de cette étape D7 on vient sélectionner le bloc suivant B à traiter par le décodeur, tel que décrit précédemment. Ce bloc devient le bloc courant à traiter, et l'étape suivante est l'étape D1 de tests des hypothèses.
A l'issue de ces étapes, tous les blocs ont été traités et la portion de flux TB1'ainsi reconstruite correspond au flux de données intermédiaire TB0 décrit dans le mode de réalisation du procédé de codage.
Dans le cas où l'étape D5 de reconstruction d'un flux complété TB1' n'est pas mise en œuvre, on positionne le décodeur entropique sur l'état ET associé à l'hypothèse correcte $H(j_0)$ pour le bloc qui vient d'être traité.

7.3.7 Décodage du train binaire complété TB1'

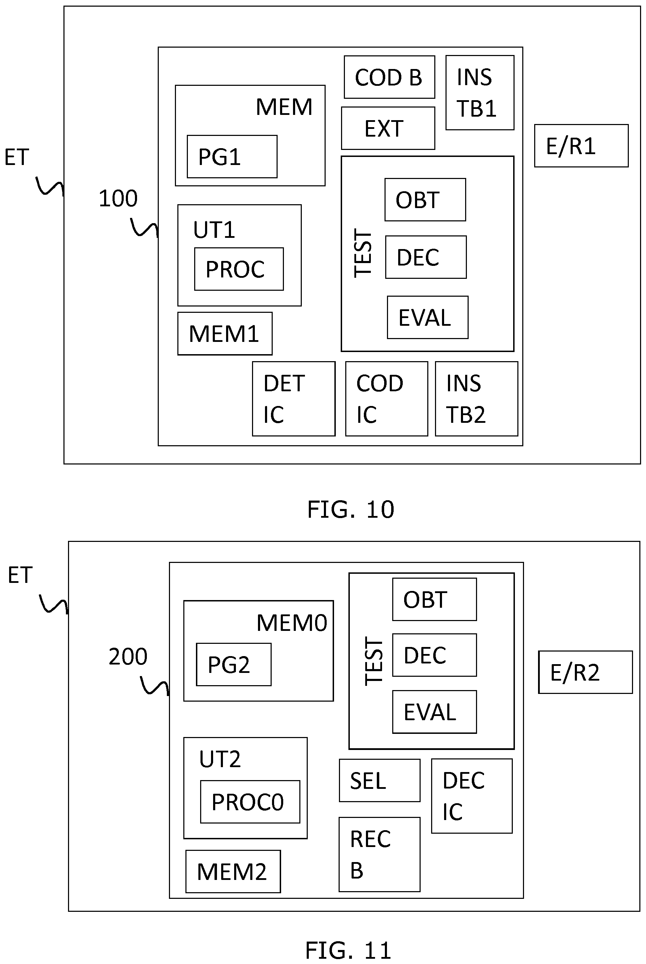

Au cours de cette étape D8, on vient décoder le train binaire TB1' complété par des moyens classiques, tel qu'un décodage selon la norme HEVC. Cette étape est optionnelle. Elle ne concerne que le cas où l'étape de reconstruction D5 a été mise en œuvre.
On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).
En relation avec la figure **10,** on présente maintenant un exemple de structure simplifiée d'un dispositif 100 de codage d'une image numérique selon l'invention. Le dispositif 100 met en œuvre le procédé de codage selon l'invention qui vient d'être décrit en relation avec la Figure **1.**
Par exemple, le dispositif 100 comprend une unité de traitement UT1 110, équipée d'un processeur u1, et pilotée par un programme d'ordinateur Pg1 120, stocké dans une mémoire 130 et mettant en œuvre le procédé de selon l'invention.
A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.
Dans cet exemple de réalisation de l'invention, le dispositif 100 comprend au moins une unité de codage du bloc courant en une pluralité de données codées, une unité d'extraction EXT de la pluralité de données codées d'une première séquence comprenant un nombre prédéterminé non nul de symboles binaires, une unité d'insertion INS dans une première portion de flux des éléments binaires des données codées n'appartenant pas à la séquence extraite . Il comprend en outre une unité de test TEST de séquences comprenant le nombre prédéterminé non nul de symboles binaires, apte à mettre en œuvre au moins deux itérations des sous-étapes suivantes :

- obtention OBT d'une séquence distincte des séquences déjà testées;
- décodage et reconstruction DEC d'une version du bloc courant à partir de la séquence de symboles binaires obtenue et de données codées lues dans la première portion de flux;
- évaluation EVAL d'une mesure de vraisemblance associée à la séquence obtenue à partir de la version du bloc reconstruite ;

Il comprend enfin une unité de détermination DET IC d'une information caractéristique de la première séquence à partir des mesures de vraisemblance associées aux séquences testées, une unité de codage COD IC de ladite information et une unité INS IC d'insertion de l'information codée dans une deuxième portion du flux.

- Il comprend aussi une unité MEM1 de stockage des mesures de vraisemblance évaluées pour chaque séquence testée. La mémoire MEM1 peut aussi stocker de façon temporaire les blocs reconstruits pour chaque hypothèse par le décodeur intégré au codeur.

Ces unités sont pilotées par le processeur $\mu 1$ de l'unité de traitement 110.

De façon avantageuse, un tel dispositif 100 peut être intégré à un équipement terminal d'utilisateur ET. Le dispositif 100 est alors agencé pour coopérer au moins avec le module suivant du terminal ET :

- un module E/R1 d'émission/réception de données, par l'intermédiaire duquel le train binaire TB ou le fichier compressé FC est transmis dans un réseau de télécommunications, par exemple un réseau filaire ou un réseau hertzien ;

En relation avec la figure **11**, on présente maintenant un exemple de structure simplifiée d'un dispositif 200 de décodage d'une image numérique selon l'invention. Le dispositif 200 met en œuvre le procédé de décodage selon l'invention qui vient d'être décrit en relation avec la Figure 7.

Par exemple, le dispositif 200 comprend une unité de traitement UT2 210, équipée d'un processeur $\mu_2$, et pilotée par un programme d'ordinateur $Pg_2$ 220, stocké dans une mémoire 230 et mettant en œuvre le procédé de selon l'invention.

A l'initialisation, les instructions de code du programme d'ordinateur $Pg_2$ 220 sont par exemple chargées dans une mémoire RAM avant d'être exécutées par le processeur de l'unité de traitement 210. Le processeur de l'unité de traitement 210 met en œuvre les étapes du procédé décrit précédemment, selon les instructions du programme d'ordinateur 120.

Dans cet exemple de réalisation de l'invention, le dispositif comprend une unité de test TEST de séquences comprenant un nombre prédéterminé non nul d'éléments binaires, ladite unité étant apte à mettre en œuvre au moins deux itérations des sous-unités suivantes, pour ledit bloc courant:

- obtention OBT d'une séquence distincte des séquences déjà testées;
- décodage DEC et reconstruction d'une version du bloc courant à partir de la séquence d'éléments binaires obtenue et de données codées lues dans la première portion de flux ;
- évaluation EVAL d'une mesure de vraisemblance associée à la séquence obtenue à partir de la version du bloc reconstruite ; et

Il comprend en outre les unités suivantes :

- décodage DEC ID d'une information caractéristique d'une première séquence comprenant le nombre prédéterminé non nul de symboles binaires à partir de la deuxième portion de flux ;
- sélection SEL d'une séquence identifiée comme la première séquence parmi les au moins deux séquences testées, en fonction de la mesure de vraisemblance évaluée et de l'information décodée ; et
- décodage et reconstruction REC B du bloc courant à partir de la séquence sélectionnée et de la première portion de flux.

Le dispositif 200 comprend en outre une unité MEM2 de stockage des mesures de vraisemblance évaluées pour chaque séquence testée. Avantageusement, dans le mode de réalisation où on ne réalise pas de deuxième passe de décodage à partir d'un flux complété TB1', il est apte à stocker en outre les éléments de syntaxe ou les pixels décodés pour le bloc ainsi que, le cas échéant, les états du décodeur entropique associés aux $2^N$ hypothèses H(j) testées.

Ces unités sont pilotées par le processeur $\mu 2$ de l'unité de traitement 210.

De façon avantageuse, un tel dispositif 200 peut être intégré à un équipement terminal d'utilisateur ET. Le dispositif 200 est alors agencé pour coopérer au moins avec le module suivant du terminal ET :

- un module E/R2 d'émission/réception de données, par l'intermédiaire duquel le train binaire TB3 ou le fichier compressé FC est reçu d'un réseau de télécommunications, par exemple un réseau filaire ou un réseau radio.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention, définie par les revendications.

**Revendications**

1. Procédé de décodage d'un flux de données codées représentatif d'au moins une image ($I_m$), ladite image étant découpée en blocs, lesdits blocs étant codés en une pluralité de données codées, lesdites pluralités de données codées constituant ledit flux, ledit codage comprenant une génération d'éléments de syntaxe et un codage entropique desdits éléments de syntaxe, **caractérisé en ce que** ledit flux comprend une première portion (TB1) comprenant, pour chaque bloc de l'image $I_m$, une partie des symboles binaires compris dans la pluralité de données codées pour ce bloc et une deuxième portion (TB2) comprenant, pour chaque bloc de l'image $I_m$, une information caractéristique (IC) de la séquence de symboles binaires manquant dans la première portion de flux (TB1), le procédé de décodage comprend, pour un bloc courant (B), une étape de test de séquences (D1) comprenant un nombre prédéterminé non nul (N) d'éléments binaires, ladite étape comprenant deux puissance le nombre prédéterminé ($2^N$) itérations des sous-étapes suivantes:

   - obtention (D11) d'une séquence (H(j)) comprenant un nombre N d'éléments binaires, distincte des séquences déjà testées;
   - décodage et reconstruction (D13) d'une version du bloc courant à partir de la séquence d'éléments binaires obtenue (H(j)) et de données codées lues dans la première portion de flux ;
   - évaluation (D14) d'une mesure de vraisemblance V(j) associée à la séquence obtenue à partir de la version du bloc reconstruite ; et

   **en ce qu'**il comprend en outre les étapes suivantes, mises en œuvre pour ledit bloc courant (B):

   - décodage (D3) d'une information caractéristique (IC(EB)) d'une première séquence comprenant le nombre prédéterminé non nul de symboles binaires à partir de la deuxième portion de flux (TB2) ;
   - sélection (D4) de la première séquence parmi les séquences testées, en fonction des mesures de vraisemblances associées aux séquences testées et de l'information décodée; et
   - décodage et reconstruction (D9) du bloc courant à partir de la première séquence sélectionnée (H(j0)) et de la première portion de flux (TB1).

2. Procédé de codage d'un flux de données codées représentatif d'au moins une image ($I_m$), ladite image étant découpée en blocs, comprenant pour un bloc courant (B) une étape de :

   - Codage (E1) du bloc courant en une pluralité de données codées, comprenant une génération d'éléments de syntaxe et un codage entropique desdits éléments de syntaxe; ledit procédé étant **caractérisé en ce qu'**il comprend les étapes suivantes, mises en oeuvre pour le bloc courant (B) :

      - Extraction (E3) de la pluralité de données codées d'une première séquence EB comprenant un nombre prédéterminé non nul (N) de symboles binaires ;
      - Insertion (E4) dans une première portion (TB1) du flux de données codées des symboles binaires de la pluralité de données codées du bloc courant n'appartenant pas à la première séquence extraite ;
      - Test de séquences (E8) comprenant le nombre prédéterminé non nul de symboles binaires, ladite étape de test de séquences (E8) comprenant deux puissance le nombre prédéterminé

   itérations des sous-étapes suivantes :

      - obtention (E81) d'une séquence distincte des séquences déjà testées;
      - décodage et reconstruction (E82) d'une version du bloc courant à partir de la séquence de symboles binaires obtenue et de données codées lues dans la première portion de flux;
      - évaluation (E83) d'une mesure de vraisemblance associée à la séquence obtenue à partir de la version du bloc reconstruite ;

   le procédé comprenant en outre une étape (E9) de détermination d'une information (IC) associée à la première séquence en fonction des mesures de vraisemblances associées aux séquences testées, une étape de codage (E10) de ladite information et une étape (E11) d'insertion de l'information codée dans une deuxième portion (TB2) du flux de données codées.

3. Procédé selon l'une des revendications **1** ou **2, caractérisé en ce que** le procédé comprend une étape (D2, E91) de tri des séquences testées selon des valeurs de mesures de vraisemblance associées décroissantes et **en ce**

**que** l'information (IC) caractéristique de la première séquence comprend un rang (DS) de la première séquence parmi les séquences triées.

4. Procédé selon la revendication **1** ou **2, caractérisé en ce que** le procédé comprend une étape (D2', E91') de détermination de la séquence testée la plus vraisemblable et **en ce que** l'information (IC) caractéristique de la première séquence comprend une mesure (BDIFF) d'une différence bit à bit entre la valeur de la première séquence et celle de la séquence la plus vraisemblable.

5. Procédé selon l'une des revendications **3** ou **4, caractérisé en ce que** l'étape d'évaluation d'une mesure de vraisemblance comprend un calcul d'une mesure de distorsion des valeurs de pixels de part et d'autre d'au moins une frontière du bloc courant avec un bloc voisin déjà traité et la mesure de vraisemblance évaluée est inversement proportionnelle à la mesure de distorsion.

6. Procédé selon l'une des revendications précédentes **caractérisé en ce que** l'étape de décodage et reconstruction (D13, E82) complète la première portion de flux en insérant au moins une partie des éléments binaires de la séquence à au moins une position prédéterminée.

7. Procédé selon la revendication précédente, **caractérisé en ce que** la position déterminée est située avant le premier élément binaire des données codées associées au bloc courant.

8. Procédé de décodage selon la revendication **1, caractérisé en ce qu'**il comprend une étape (D5) de reconstruction d'un flux de données codées complété à partir de la première portion de flux et de la séquence sélectionnée.

9. Procédé de décodage selon la revendication **1, caractérisé en ce qu'**il comprend une étape (D5') de stockage du bloc reconstruit dans une mémoire (MEM2).

10. Procédé selon la revendication **9, caractérisé en ce que** les étapes de décodage comprennent un décodage entropique à états finis, l'étape de stockage comprend en outre le stockage d'un état (ET) du décodeur entropique associé à la séquence sélectionnée.

11. Dispositif (200) de décodage d'un flux de données codées représentatif d'au moins une image, ladite image étant découpée en blocs, lesdits blocs étant codés en une pluralité de données codées, lesdites pluralités de données codées constituant ledit flux, ledit codage comprenant une génération d'éléments de syntaxe et un codage entropique desdits éléments de syntaxe, **caractérisé en ce que** ledit flux comprend une première portion (TB1) comprenant, pour chaque bloc de l'image $I_m$, une partie des symboles binaires compris dans la pluralité de données codées pour ce bloc et une deuxième portion (TB2)) comprenant, pour chaque bloc de l'image $I_m$, une information caractéristique (IC) de la séquence de symboles binaires manquant dans la première portion de flux (TB1), ledit dispositif de décodage comprend une unité (TEST) de test de séquences comprenant un nombre prédéterminé non nul d'éléments binaires, ladite unité étant configurée pour mettre en œuvre deux puissance le nombre prédéterminé ($2^N$) itérations des étapes suivantes, pour ledit bloc courant:

- obtention (OBT) d'une séquence comprenant un nombre N d'éléments binaires, distincte des séquences déjà testées;
- décodage (DEC) et reconstruction d'une version du bloc courant à partir de la séquence d'éléments binaires obtenue et de données codées lues dans la première portion de flux ;
- évaluation (EVAL) d'une mesure de vraisemblance associée à la séquence obtenue à partir de la version du bloc reconstruite ; et

**en ce qu'**il comprend en outre des unités de:

- décodage (DEC IC) d'une information caractéristique d'une première séquence comprenant le nombre prédéterminé non nul de symboles binaires aux séquences testées, à partir de la deuxième portion de flux ;
- sélection (SEL) d'une séquence parmi les au moins deux séquences testées, en fonction de la mesure de vraisemblance évaluée et de l'information décodée, ladite séquence sélectionnée étant identifiée comme la première séquence ; et
- décodage (REC B) et reconstruction du bloc courant à partir de la première séquence et de la première portion de flux.

**12.** Dispositif (100) de codage d'un flux de données codées représentatif d'au moins une image, ladite image étant découpée en blocs, comprenant une unité configurée pour mettre en œuvre pour un bloc courant une étape de:

- Codage (COD B) du bloc courant en une pluralité de données codées, comprenant une génération d'éléments de syntaxe et un codage entropique desdits éléments de syntaxe; le dispositif étant **caractérisé en ce qu'**il comprend des unités configurées pour mettre en oeuvre les étapes suivantes pour le bloc courant:

- Extraction (EXT) de la pluralité de données codées d'une première séquence comprenant un nombre prédéterminé non nul de symboles binaires ;
- Insertion (INS TB1) dans une première portion (TB1) du flux de données codées des symboles binaires de la pluralité de données codées du bloc courant n'appartenant pas à la séquence extraite ; et **en ce qu'**il comprend une unité (TEST) de test de séquences comprenant le nombre prédéterminé non nul de symboles binaires, ladite unité de test de séquences étant configurée pour mettre en œuvre deux puissance le nombre prédéterminé ($2^N$) itérations des sous-étapes suivantes :

- obtention (OBT) d'une séquence distincte des séquences déjà testées;
- décodage (DEC) et reconstruction d'une version du bloc courant à partir de la séquence de symboles binaires obtenue et de données codées lues dans la première portion de flux;
- évaluation (EVAL) d'une mesure de vraisemblance associée à la séquence obtenue à partir de la version du bloc reconstruite ;

et **en ce qu'**il comprend en outre une unité de détermination (DET IC) d'une information (IC) caractéristique de la première séquence en fonction des mesures de vraisemblances associées aux séquences testées, une unité (COD IC) de codage de ladite information et une unité d'insertion (INS TB2) de l'information codée dans une deuxième portion (TB2) du flux de données codées.

**13.** Signal portant un train binaire (TB3), appelé flux, comprenant des données codées représentatives d'au moins une image numérique ($I_m$), ladite image numérique étant divisée en blocs de pixels traités dans un ordre défini, lesdits blocs étant codés en une pluralité de données codées, lesdites pluralités de données codées constituant ledit flux, ledit codage comprenant une génération d'éléments de syntaxe et un codage entropique desdits éléments de syntaxe, **caractérisé en ce que** le flux de données codées comprend, pour un bloc courant (B), au moins une première portion de flux (TB1) comprenant des données codées représentatives d'éléments de syntaxe du bloc courant et une deuxième portion de flux (TB2) comprenant une information (IC) caractéristique d'une première séquence (EB) comprenant un nombre prédéterminé non nul d'éléments binaires, et **en ce que**, sur réception dudit signal, un décodeur est apte à identifier la première séquence d'éléments binaires à partir de l'information caractéristique et à reconstruire le bloc courant à partir des données décodées de la première portion de flux et de la première séquence identifiée.

**14.** Equipement terminal d'utilisateur (ET) **caractérisé en ce qu'**il comprend un dispositif de décodage (200) d'au moins une image numérique selon la revendication **11** et un dispositif de codage (100) d'au moins une image numérique selon la revendication **12.**

**15.** Programme d'ordinateur (Pg1, Pg2) comprenant des instructions qui, losque le programme est exécuté par un ordinateur, conduisent celui-ci à mettre en oeuvre les étapes des revendications 1 à 10.

**Patentansprüche**

**1.** Verfahren zur Decodierung eines Stroms codierter Daten, der für mindestens ein Bild ($I_m$) repräsentativ ist, wobei das Bild in Blöcke zerteilt ist, wobei die Blöcke in eine Vielzahl codierter Daten codiert sind, wobei die Vielzahlen codierter Daten den Strom bilden, wobei die Codierung eine Generierung von Syntaxelementen und eine entropische Codierung der Syntaxelemente umfasst, **dadurch gekennzeichnet, dass** der Strom einen ersten Abschnitt (TB1) umfasst, der für jeden Block des Bildes $I_m$ einen Teil der binären Symbole umfasst, die in der Vielzahl codierter Daten für diesen Block enthalten sind und einen zweiten Abschnitt (TB2), der für jeden Block des Bildes $I_m$ eine charakteristische Information (IC) der Sequenz binärer Symbole umfasst, die im ersten Stromabschnitt (TB1) fehlt, wobei das Decodierungsverfahren für einen laufenden Block (B) einen Sequenztestschritt (D1) umfasst, umfassend eine vorher festgelegte Anzahl von nicht Null (N) binärer Elemente, wobei der Schritt zwei hoch die vorher festgelegte Anzahl ($2^N$) Iterationen der folgenden Unterschritte umfasst:

- Erhalten (D11) einer Sequenz (H(j)), die eine Anzahl N binärer Elemente umfasst, die sich von den bereits getesteten Sequenzen unterscheidet;
- Decodieren und Rekonstruieren (D13) einer Version des laufenden Blocks auf der Basis der erhaltenen Sequenz binärer Elemente (H(j)) und von gelesenen codierten Daten im ersten Stromabschnitt;
- Evaluieren (D14) einer Wahrscheinlichkeitsmessung V(j), die der erhaltenen Sequenz zugeordnet ist, auf der Basis der rekonstruierten Version des Blocks; und

dass es ferner die folgenden Schritte umfasst, die für den laufenden Block (B) durchgeführt werden:

- Decodieren (D3) einer charakteristischen Information (IC(EB)) einer ersten Sequenz, umfassend die vorher festgelegte Anzahl von nicht Null binärer Symbole auf der Basis des zweiten Stromabschnitts (TB2);
- Auswählen (D4) der ersten Sequenz aus den getesteten Sequenzen in Abhängigkeit von den Wahrscheinlichkeitsmessungen, die den getesteten Sequenzen zugeordnet sind, und der decodierten Information; und
- Decodieren und Rekonstruieren (D9) des laufenden Blocks auf der Basis der ausgewählten ersten Sequenz (H(j0)) und des ersten Stromabschnitts (TB1).

2. Verfahren zur Decodierung eines Stroms codierter Daten, der für mindestens ein Bild ($I_m$) repräsentativ ist, wobei das Bild in Blöcke zerteilt ist, umfassend, für einen laufenden Block (B), einen Schritt zum:

- Codieren (E1) des laufenden Blocks in eine Vielzahl codierter Daten; umfassend eine Generierung von Syntaxelementen und eine entropische Codierung der Syntaxelemente,
wobei das Verfahren **dadurch gekennzeichnet ist, dass** es die folgenden Schritte umfasst, die für den laufenden Block (B) durchgeführt werden:

- Extrahieren (E3) der Vielzahl codierter Daten einer ersten Sequenz EB, umfassend eine vorher festgelegte Anzahl von nicht Null (N) binärer Symbole;
- Einsetzen (E4) in einen ersten Abschnitt (TB1) des Stroms codierter Daten der binären Symbole der Vielzahl codierter Daten des laufenden Blocks, die nicht zu der extrahierten ersten Sequenz gehören;
- Test von Sequenzen (E8), umfassend die vorher festgelegte Anzahl von nicht Null binärer Symbole, wobei der Sequenztestschritt (E8) zwei hoch die vorher festgelegte Anzahl Iterationen der folgenden Unterschritte umfasst:
- Erhalten (E81) einer Sequenz, die sich von den bereits getesteten Sequenzen unterscheidet;
- Decodieren und Rekonstruieren (E82) einer Version des laufenden Blocks auf der Basis der erhaltenen Sequenz binärer Symbole und gelesener codierter Daten im ersten Stromabschnitt;
- Evaluieren (E83) einer Wahrscheinlichkeitsmessung, die der erhaltenen Sequenz zugeordnet ist, auf der Basis der rekonstruierten Version des Blocks;

wobei das Verfahren ferner einen Schritt (E9) des Bestimmens einer Information (IC) umfasst, die der ersten Sequenz zugeordnet ist, in Abhängigkeit der Wahrscheinlichkeitsmessungen, die den getesteten Sequenzen zugeordnet sind, einen Schritt des Codierens (E10) der Information und einen Schritt (E11) des Einsetzens der codierten Information in einen zweiten Abschnitt (TB2) des Stroms codierter Daten.

3. Verfahren nach einem der Ansprüche 1 oder 2, **dadurch gekennzeichnet, dass** das Verfahren einen Schritt (D2, E91) des Sortierend der getesteten Sequenzen gemäß den zugeordneten Werten von Wahrscheinlichkeitsmessungen in absteigender Reihenfolge umfasst und dass die charakteristische Information (IC) der ersten Sequenz einen Rang (DS) der ersten Sequenz von den sortierten Sequenzen umfasst.

4. Verfahren nach Anspruch 1 oder 2, **dadurch gekennzeichnet, dass** das Verfahren einen Schritt (D2', E91') des Bestimmens der wahrscheinlichsten getesteten Sequenz umfasst und dass die charakteristische Information (IC) der ersten Sequenz eine Messung (BDIFF) einer Bit-zu-Bit-Differenz zwischen dem Wert der ersten Sequenz und dem der wahrscheinlichsten Sequenz umfasst.

5. Verfahren nach einem der Ansprüche 3 oder 4, **dadurch gekennzeichnet, dass** der Schritt des Evaluierens einer Wahrscheinlichkeitsmessung eine Berechnung einer Distorsionsmessung der Pixelwerte beiderseits mindestens einer Grenze des laufenden Blocks mit einem bereits verarbeiteten benachbarten Block umfasst und die evaluierte Wahrscheinlichkeitsmessung umgekehrt proportional zu der Distorsionsmessung ist.

6. Verfahren nach einem der vorangehenden Ansprüche, **dadurch gekennzeichnet, dass** der Schritt des Decodierens und Rekonstruierens (D13, E82) den ersten Stromabschnitt durch Einsetzen mindestens eines Teils der binären Elemente der Sequenz an mindestens einer vorher festgelegten Position vervollständigt.

7. Verfahren nach vorangehendem Anspruch, **dadurch gekennzeichnet, dass** sich die bestimmte Position vor dem ersten binären Element der codierten Daten befindet, die dem laufenden Block zugeordnet sind.

8. Decodierungsverfahren nach Anspruch 1, **dadurch gekennzeichnet, dass** es einen Schritt (D5) des Rekonstruierens eines auf der Basis des ersten Stromabschnitts und der ausgewählten Sequenz vervollständigten Stroms codierter Daten umfasst.

9. Decodierungsverfahren nach Anspruch 1, **dadurch gekennzeichnet, dass** es einen Schritt (D5') des Speicherns des rekonstruierten Blocks in einem Speicher (MEM2) umfasst.

10. Verfahren nach Anspruch 9, **dadurch gekennzeichnet, dass** die Schritte des Decodierens ein entropisches Endzustandsdecodieren umfassen, wobei der Schritt des Speicherns ferner das Speichern eines Zustands (ET) des entropischen Decoders umfasst, der der ausgewählten Sequenz zugeordnet ist.

11. Vorrichtung (200) zur Decodierung eines Stroms codierter Daten, der für mindestens ein Bild repräsentativ ist, wobei das Bild in Blöcke zerteilt ist, wobei die Blöcke in eine Vielzahl codierter Daten codiert sind, wobei die Vielzahlen codierter Daten den Strom bilden, wobei die Codierung eine Generierung von Syntaxelementen und eine entropische Codierung der Syntaxelemente umfasst, **dadurch gekennzeichnet, dass** der Strom einen ersten Abschnitt (TB1) umfasst, der für jeden Block des Bildes $I_m$ einen Teil der binären Symbole umfasst, die in der Vielzahl codierter Daten für diesen Block enthalten sind und einen zweiten Abschnitt (TB2), der für jeden Block des Bildes $I_m$ eine charakteristische Information (IC) der Sequenz binärer Symbole umfasst, die im ersten Stromabschnitt (TB1) fehlt, wobei die Decodierungsvorrichtung eine Sequenztesteinheit (TEST) umfasst, umfassend eine vorher festgelegte Anzahl von nicht Null binärer Elemente, wobei die Einheit konfiguriert ist, um zwei hoch die vorher festgelegte Anzahl ($2^N$) Iterationen der folgenden Schritte für den laufenden Block durchzuführen:

- Erhalten (OBT) einer Sequenz, die eine Anzahl N binärer Elemente umfasst, die sich von den bereits getesteten Sequenzen unterscheidet;
- Decodieren (DEC) und Rekonstruieren einer Version des laufenden Blocks auf der Basis der erhaltenen Sequenz binärer Elemente und von gelesenen codierten Daten im ersten Stromabschnitt;
- Evaluieren (EVAL) einer Wahrscheinlichkeitsmessung, die der erhaltenen Sequenz zugeordnet ist, auf der Basis der rekonstruierten Version des Blocks; und

und dass sie ferner Einheiten umfasst zum:

- Decodieren (DEC IC) einer charakteristischen Information einer ersten Sequenz, umfassend die vorher festgelegte Anzahl von nicht Null binärer Symbole in den getesteten Sequenzen auf der Basis des zweiten Stromabschnitts;
- Auswählen (SEL) einer Sequenz aus den mindestens zwei getesteten Sequenzen in Abhängigkeit von der evaluierten Wahrscheinlichkeitsmessung und der decodierten Information, wobei die ausgewählte Sequenz als die erste Sequenz identifiziert ist; und
- Decodieren (REC B) und Rekonstruieren des laufenden Blocks auf der Basis der ersten Sequenz und des ersten Stromabschnitts.

12. Vorrichtung (100) zum Codieren eines Stroms codierter Daten, der für mindestens ein Bild repräsentativ ist, wobei das Bild in Blöcke zerteilt ist, umfassend eine Einheit, die konfiguriert ist, um für einen laufenden Block einen Schritt durchzuführen zum:

- Codieren (COD B) des laufenden Blocks in eine Vielzahl codierter Daten; umfassend eine Generierung von Syntaxelementen und eine entropische Codierung der Syntaxelemente,

wobei die Vorrichtung **dadurch gekennzeichnet ist, dass** sie Einheiten umfasst, die konfiguriert sind, um die folgenden Schritte für den laufenden Block durchzuführen:

- Extrahieren (EXT) der Vielzahl codierter Daten einer ersten Sequenz, umfassend eine vorher festgelegte Anzahl von nicht Null binärer Symbole;

- Einsetzen (INS TB1), in einen ersten Abschnitt (TB1) des Stroms codierter Daten, der binären Symbole der Vielzahl codierter Daten des laufenden Blocks, die nicht zu der extrahierten Sequenz gehören;

und dass sie eine Sequenztesteinheit (TEST) umfasst, umfassend die vorher festgelegte Anzahl von nicht Null binärer Symbole, wobei die Sequenztesteinheit konfiguriert ist, um zwei hoch die vorher festgelegte Anzahl ($2^N$) Iterationen der folgenden Unterschritte durchzuführen:

- Erhalten (OBT) einer Sequenz, die sich von den bereits getesteten Sequenzen unterscheidet;
- Decodieren (DEC) und Rekonstruieren einer Version des laufenden Blocks auf der Basis der erhaltenen Sequenz binärer Symbole und von gelesenen codierten Daten im ersten Stromabschnitt;
- Evaluieren (EVAL) einer Wahrscheinlichkeitsmessung, die der erhaltenen Sequenz zugeordnet ist, auf der Basis der rekonstruierten Version des Blocks;

und dass sie ferner eine Bestimmungseinheit (DET IC) einer charakteristischen Information (IC) der ersten Sequenz in Abhängigkeit von den Wahrscheinlichkeitsmessungen, die den getesteten Sequenzen zugeordnet sind, eine Codierungseinheit (COD IC) der Information und eine Einheit zum Einsetzen (INS TB2) der codierten Information in einen zweiten Abschnitt (TB2) des Stroms codierter Daten umfasst.

13. Signal, das einen binären Train (TB3) trägt, bezeichnet als Strom, umfassend codierte Daten, die für mindestens ein digitales Bild ($I_m$) repräsentativ sind, wobei das digitale Bild in Pixelblöcke unterteilt ist, die in einer festgelegten Reihenfolge verarbeitet werden, wobei die Blöcke in eine Vielzahl codierter Daten codiert sind, wobei die Vielzahlen codierter Daten den Strom bilden, wobei die Codierung eine Generierung von Syntaxelementen und eine entropische Codierung der Syntaxelemente umfasst, **dadurch gekennzeichnet, dass** der Strom codierter Daten für einen laufenden Block (B) mindestens einen ersten Stromabschnitt (TB1) umfasst, umfassend repräsentative codierte Daten von Syntaxelementen des laufenden Blocks, und einen zweiten Stromabschnitt (TB2), umfassend eine charakteristische Information (IC) einer ersten Sequenz (EB), umfassend eine vorher festgelegte Anzahl von nicht Null binärer Elemente, und dass, bei Empfang des Signals, ein Decoder imstande ist, die erste Sequenz binärer Elemente auf der Basis der charakteristischen Information zu identifizieren und den laufenden Block auf der Basis der decodierten Daten des ersten Stromabschnitts und der ersten identifizierten Sequenz zu rekonstruieren.

14. Benutzer-Endgerätausrüstung (ET), **dadurch gekennzeichnet, dass** sie eine Decodierungsvorrichtung (200) mindestens eines digitalen Bildes nach Anspruch 11 und eine Codierungsvorrichtung (100) mindestens eines digitalen Bildes nach Anspruch 12 umfasst.

15. Rechnerprogramm (Pg1, Pg2), umfassend Befehle, die, wenn das Programm auf einem Rechner ausgeführt wird, diesen veranlassen, die Schritte der Ansprüche 1 bis 10 durchzuführen.

**Claims**

1. A method for decoding an encoded data stream representative of at least one image ($I_m$), said image being divided into blocks, said blocks being coded in a plurality of coded data, said pluralities of coded data constituting said stream, said coding comprising a generation of syntax elements and an entropy coding of said syntax elements, wherein said stream comprises a first portion (TB1) comprising, for each block of the image $I_m$, a part of the binary symbols included in the plurality of data coded for this block and a second portion (TB2) comprising, for each block of the image $I_m$, characteristic information (IC) of the sequence of binary symbols missing in the first portion of stream (TB1), the decoding method comprises, for a current block (B), a sequence test step (D1) comprising a predetermined non-zero number (N) of bits, said step comprising two at the power of the predetermined number ($2^N$) of iterations of the following substeps:

- obtaining (D11) a sequence (H(j)) comprising a number N of bits, distinct from the sequences already tested;
- decoding and reconstructing (D13) a version of the current block from the bit sequence obtained (H(j)) and from coded data read in the first stream portion;
- evaluating (D14) a likelihood measurement V(j) associated with the sequence obtained from the version of the reconstructed block;

in that it further comprises the following steps, implemented for said current block (B):;

- decoding (D3) a piece of information characteristic (IC(EB)) of a first sequence comprising the predetermined non-zero number of binary symbols from the second stream portion (TB2);
- selecting (D4) the first sequence from the sequences tested, based on the likelihood measurements associated with the sequences tested and the decoded information; and
- decoding and reconstructing (D9) the current block from the first sequence selected (H(j0)) and the first stream portion (TB1).

**2.** A method for coding a coded data stream representative of at least one image ($I_m$), said image being divided into blocks, comprising for a current block (B) a step of:

- encoding (E1) the current block into a plurality of encoded data, comprising a generation of syntax elements and an entropy coding of said syntax elements; wherein the method comprises the followings steps implemented for the current block (B):

  - extracting (E3) the plurality of encoded data from a first sequence EB comprising a predetermined non-zero number (N) of binary symbols;
  - inserting (E4), into a first portion (TB1) of the coded data stream of binary symbols of a plurality of coded data of the current block which do not belong to the first extracted sequence;
  - a sequence test (E8) including a predetermined non-zero number of binary symbols, said sequence test step (E8) including two at the power of the predetermined number of iterations of the following substeps:

    - obtaining (E81) a sequence distinct from the sequences already tested;
    - decoding and reconstructing (E82) a version of the current block from the binary symbol sequence obtained and from coded data read in the first stream portion;
    - evaluating (E83) a likelihood measurement associated with the sequence obtained from the version of the reconstructed block;

  the method further comprising a step (E9) for determining a piece of information (IC) associated with the first sequence depending on likelihood measurements associated with the sequences tested a step (E10) of coding said information and a step (E11) of inserting the coded information into a second portion (TB2) of the encoded data stream.

**3.** The method according to one of the claims 1 or 2, **characterised in that** the method comprises a step (D2, E91) of sorting the sequences tested according to associated decreasing likelihood measurement values and **in that** the information (IC) characteristic of the first sequence comprises a rank (DS) of the first sequence among the sorted sequences.

**4.** The method according to claim 1 or 2, **characterised in that** the method comprises a step (D2', E91') of determining the most probable sequence tested and the information characteristic of the first sequence (IC) comprises measuring a bitwise difference (BDIFF) between the value of the first sequence and that of the most probable sequence.

**5.** The method according to one of the claims 3 or 4, **characterised in that** the step of evaluating a likelihood measurement comprises calculating a distortion measurement of the pixel values on both side of at least one boundary of the current block with a neighbouring block already processed and the likelihood measurement evaluated is inversely proportional to the distortion measurement.

**6.** The method according to one of the previous claims, **characterised in that** the decoding and reconstruction step (D13, E82) completes the first stream portion by inserting at least one portion of the bits of the sequence at at least one predetermined position.

**7.** The method according to the preceding claim, **characterised in that** the determined position is located before the first bit of the coded data associated with the current block.

**8.** The decoding method according to claim 1, **characterised in that** it comprises a step (D5) of reconstructing a coded data stream completed from the first stream portion and the selected sequence.

**9.** The decoding method according to claim 1, **characterised in that** it comprises a step (D5') of storing of the block reconstructed in a memory (MEM2).

**10.** The method according to claim 9, **characterised in that** the decoding steps include finite state entropy decoding, the storing step further comprises storing a state (ET) of the entropy decoder associated with the selected sequence.

**11.** A device (200) for decoding an encoded data stream representative of at least one image, said image being divided into blocks, said blocks being coded in a plurality of coded data, said pluralities of coded data constituting said stream, said coding comprising a generation of syntax elements and an entropy coding of said syntax elements, wherein said stream comprises a first portion (TB1) comprising, for each block of the image $I_m$, a part of the binary symbols included in the plurality of data coded for this block and a second portion (TB2) comprising, for each block of the image $I_m$, characteristic information (IC) of the sequence of binary symbols missing in the first portion of stream (TB1), said decoding device comprises a sequence test unit (TEST) comprising a predetermined non-zero number of bits, said unit being configured to implement at least two at the power of the predetermined number ($2^N$) iterations of the following units, for said current block:

- obtaining (OBT) a sequence distinct from the sequences already tested;
- decoding (DEC) and reconstructing a version of the current block from the bit sequence obtained and from coded data read in the first stream portion;
- evaluating (EVAL) a likelihood measurement associated with the sequence obtained from the version of the reconstructed block; and

in that it further comprises units for:

- decoding (DEC IC) a piece of information characteristic of a first sequence comprising the predetermined non-zero number of binary symbols with the sequences tested, from the second stream portion;
- selecting (SEL) a sequence identified among said at least two sequences tested, based on the measured likelihood measurement and the decoded information, said selected sequence being identified as the first sequence; and
- decoding (REC B) and reconstructing the current block from the first sequence and the first stream portion.

**12.** The device (100) for coding a coded data stream representative of at least one image, said image being divided into blocks, comprising a united configured for implementing for a current block a step for:

- encoding (COD B) the current block into a plurality of encoded data, comprising a generation of syntax elements and an entropy coding of said syntax elements; the device being **characterised in that** it comprises units configured for implementing the followings steps for a current block:
- extracting (EXT) the plurality of encoded data from a first sequence comprising a predetermined non-zero number of binary symbols;
- inserting (INS TB1), into a first portion (TB1) of the coded stream, binary symbols of a plurality of coded data of a current block not belonging to the extracted sequence;

and **in that** it comprises a sequence test unit (TEST) including a predetermined non-zero number of binary symbols, said sequence test unit being configured for implementing two at the power of the predetermined number ($2^N$) of iterations of the following substeps:

- obtaining (OBT) a sequence distinct from the sequences already tested;
- decoding (DEC) and reconstructing a version of the current block from the sequence of binary symbols obtained and from coded data read in the first stream portion;
- evaluating (EVAL) a likelihood measurement associated with the sequence obtained from the version of the reconstructed block;

and **in that** it further comprises a step (E9) of determining a piece of information (IC) characteristic of the first sequence depending on likelihood measurements associated with the sequences tested a unit (COD IC) for coding said information and a unit (ENS TB2) for inserting the coded information into a second portion (TB2) of the coded stream.

**13.** A signal carrying a bitstream (TB3), called stream, comprising coded data representative of at least one digital image ($I_m$), said digital image being divided into blocks of processed pixels in a defined order, said blocks being coded in a plurality of coded data, said pluralities of coded data constituting said stream, said coding comprising a generation of syntax elements and an entropy coding of said syntax elements, **characterised in that** the encoded data stream comprises, for a current block (B), at least one first stream portion (TB1) comprising representative data encoded syntax elements of the current block and a second portion stream (TB2) comprising a piece of information (IC) characteristic of a first sequence (EB) comprising a predetermined non-zero number of bits, and **in that**, on receiving said signal, a decoder is able to identify the first bit sequence from the characteristic information and to reconstruct the current block from the decoded data of the first stream portion and the first sequence identified.

14. A user terminal equipment (ET) **characterised in that** it comprises a device (200) for decoding at least one digital image according to claim 11 and a device (100) for coding at least one digital image according to claim 12.

15. A computer program (Pg1, Pg2) comprising instructions, that, when the program is executed by a processor, lead to implement the steps of the method according to one of claims 1 to 10.

FIG. 1

FIG. 2

| | | | | | 0 | 0 | 1 | 1 | 0 | 1 | | | | | | | | | 1 | 1 | 0 | 1 | 0 | 1 | 0 |
|---|---|---|---|---|---|---|---|---|---|---|---|---|---|---|---|---|---|---|---|---|---|---|---|---|---|
| CU1 | | | | | | | | | | | | | CU2 | | CU3 | | CU4 | | | | | | | | |

| 0 | 0 | 0 | 0 | 0 | 0 |
|---|---|---|---|---|---|

| 0 | 0 | 0 | 0 | 0 | 1 |
|---|---|---|---|---|---|

| 0 | 0 | 0 | 0 | 1 | 0 |
|---|---|---|---|---|---|

...

| 0 | 1 | 1 | 0 | 1 | 0 |
|---|---|---|---|---|---|

| 1 | 1 | 1 | 1 | 1 | 1 |
|---|---|---|---|---|---|

FIG. 3

|   |   |   |   |   | 0 | 0 | 1 | 1 | 0 | 1 |   |   |   |   |   |   |   |   | 1 | 1 | 0 | 1 | 0 | 1 | 0 |
|---|---|---|---|---|---|---|---|---|---|---|---|---|---|---|---|---|---|---|---|---|---|---|---|---|---|

| CU1 | CU2 | CU 3 | CU4 |
|---|---|---|---|

| 0 | 0 | 0 | 0 | 0 | 0 |
|---|---|---|---|---|---|

| 0 | 0 | 0 | 0 | 0 | 1 |
|---|---|---|---|---|---|

| 0 | 0 | 0 | 0 | 1 | 0 |
|---|---|---|---|---|---|

...

| 0 | 1 | 1 | 0 | 1 | 0 |
|---|---|---|---|---|---|

| 1 | 1 | 1 | 1 | 1 | 1 |
|---|---|---|---|---|---|

FIG. 4

|  |  |  |  |  |  |  |  |  |  |
|---|---|---|---|---|---|---|---|---|---|
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  | B5 | B6 | B7 | B8 |
|  |  |  |  |  |  | A5 | A6 | A7 | A8 |
|  |  |  |  | B4 | A4 | r4 | r5 | r6 | r7 |
|  |  |  |  | B3 | A3 | r3 |  |  |  |
|  |  |  |  | B2 | A2 | r2 |  |  |  |
|  |  |  |  | B1 | A1 | r1 |  |  |  |
|  |  |  |  |  |  |  |  |  |  |

FIG. 5

TB3

| FL2 |  |  |
|---|---|---|

TB1                    TB2

FIG. 6

FIG. 7

TB3

FL2 | 0011011100010011110|10010

TB1

PF1

PF2

TB2

FIG. 8

TB1'

| 0 | 0 | 1 | 1 | 0 | 1 | | | | 1 | 1 | 0 | 1 | 0 | 1 | 0 | | | 1 | 1 | 0 | 1 |

B1    B2  B3      B4           B5

SEL EB(B1)

D5

SEL EB(B2)

D4

SEL EB(B3)

SEL EB(B4)

SEL EB(B5)

IC(B1) | IC(B2) | IC(B3) | IC(B4) | IC(B5)

D3    DE

TB2    0 1 1 0 1 1 1 1 0 1 0 0 0 0 0

FIG. 9

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATTHIAS WIEN.** High Efficiency Video Coding, Coding Tools and Spécification. *Signais and Communication Technology,* 2015

- **D. MARPE et al.** Context-based adaptive binary arithmetic coding in the H.264/AVC video compression standard. *IEEE TRANSACTIONS ON CIRCUITS AND SYSTEMS FOR VIDEO TECHNOLOGY,* 01 Juillet 2003, vol. 13 (7), ISSN 1051-8215, 620-636